(19) **Europäisches Patentamt**

**European Patent Office**

**Office européen des brevets**

(11) **EP 1 253 457 B1**

(12) **EUROPÄISCHE PATENTSCHRIFT**

(45) Veröffentlichungstag und Bekanntmachung des Hinweises auf die Patenterteilung:
**15.03.2006 Patentblatt 2006/11**

(51) Int Cl.:
*G02B 26/06* (2006.01)    *G02B 21/24* (2006.01)

(21) Anmeldenummer: **02015411.8**

(22) Anmeldetag: **31.07.1998**

(54) **Mikroskop mit adaptiver Optik**

Microscope having an adaptive optical system

Microscope à système optique adaptif

(84) Benannte Vertragsstaaten:
**CH DE FR GB LI**

(30) Priorität: **01.08.1997 DE 19733193**

(43) Veröffentlichungstag der Anmeldung:
**30.10.2002 Patentblatt 2002/44**

(62) Dokumentnummer(n) der früheren Anmeldung(en) nach Art. 76 EPÜ:
**98945132.3 / 0 929 826**

(73) Patentinhaber: **CARL ZEISS JENA GmbH**
**07745 Jena (DE)**

(72) Erfinder:
- **Simon, Ulrich**
  **07751 Rothenstein (DE)**
- **Gluch, Martin**
  **07743 Jena (DE)**
- **Wolleschensky, Ralf**
  **99510 Schöten (DE)**
- **Grub, Robert**
  **73540 Heubach (DE)**
- **Faulstich, Andreas**
  **37077 Göttingen (DE)**
- **Völcker, Martin**
  **37073 Göttingen (DE)**

(74) Vertreter: **Geyer, Fehners & Partner**
**Patentanwälte**
**Sellierstrasse 1**
**07745 Jena (DE)**

(56) Entgegenhaltungen:
**EP-A- 0 307 354**          **WO-A-93/22711**

- **J. GLUCKSTAD ET AL.: "Improvement of axial response in three dimensional light focusing by use of dynamic phase compensation" NAAO'97, Seiten 10-12, XP002090355**

EP 1 253 457 B1

**Beschreibung**

**Gebiet der Erfindung**

Die Erfindung bezieht sich auf die Erweiterung gängiger Mikroskope um eine adaptive Optik im Beobachtungs- und/oder Beleuchtungsstrahlengang eines Mikroskops. Als adaptive Optik sind hierbei optisch wirksame Baugruppen zur Wellenfrontmodulation zu verstehen. Die adaptive Optik verändert die Phase und/öder die Amplitude des Lichtes gezielt derart, daß sowohl eine Verschiebung und Formung des Fokus im Objektraum, als auch eine Korrektur von eventuellen Aberrationen bewirkt wird. Die möglichen Einsatzgebiete umfassen die konfokale Mikroskopie, die lasergestützte Mikroskopie, die konventionelle Lichtmikroskopie und die analytische Mikroskopie.

**Stand der Technik**

Die vorliegende Erfindung geht von folgenden bisherigen Veröffentlichungen aus:

- US 4,408,874; W. Zinky, L. Rosenberg; 1981/1983: "Mechanisch oder pneumatisch deformierbares optisches Element zur astigmatischen Vergrößerungseinstellung für Abbildungssystemen in der Lithographie".
- EPO 0098969 B1; J. Arnaud; 1983/1987: "Deformierbares optisches Element zur astigmatischen Korrektur". Die Dicke der Spiegelmembran variiert über die Fläche, so daß beim Durchbiegen durch externe Kräfte die Membran eine zuvor berechnete Form annimmt.
- EPO 0307354 B1; H. Choffat; 1988/1992: "Ringanordnung aus bimorphen Piezoschichten zur axialen Feinverstellung von Komponenten, z.B. Mikroskopobjektive".
- US 5,142,132; B. MacDonald, R. Hunter, A. Smith; 1990/1992: "Adaptiv gesteuertes optisches System zur Waferherstellung (Stepper)". Das adaptive Element steuert den Fokus und korrigiert Aberrationen. Das Fehlersignal für die Korrektur wird aus dem vom Wafer rückreflektierten Licht durch Interferenz mit dem ursprünglichen Licht gewonnen. Ein genaues Verfahren zur Aberrationskorrektur wird nicht angegeben.
- DP DE 3404063 C2; A. Suzuki, M. Kohno; 1984/1993: "Gekrümmte durchlässige Membran im Strahlengang eines Abbildenden Systems zur Korrektur von Abbildungsfehlern, besonders der lateralen Fokusablage".
- US 5,504,575; R. Stafford; 1993/1996: "Spektrometer, basierend auf räumlichem Lichtmodulator und dispersivem Element". Es werden Fasern und optische Schalter / flexiblen Spiegel verwendet, um das Licht nach Durchgang durch das dispersive Element auf den Detektor zu schalten.

- EPO 167877; Bille, Heidelberg Instruments; 1985 angemeldet: "Ophtalmoskop mit adaptivem Spiegel".
- *J. Glückstad et al.: "Improvements of axial response in three dimensional light focusing by use of dynamic phase compensation", 1997 OSA Technical Digest Series, Vol. 13, Munich Germany 16-17 June 1997. In dieser Veröffentlichung wird die Möglichkeit der Fokussierung des Strahlengangs bei herkömmlichen Lichtmikroskopen unter Nutzung der Phasenkompensation mittels einer adaptiven Optik beschrieben. Eine dynamische Kompensation von Verzerrung der Wellenfront, die durch Aberrationen des Objektivs verursacht sind und ihrerseits zu Bildfehlern führen, ist hiermit nicht möglich.*

Der Beschreibung der vorliegenden Erfindung liegen folgende Begriffsbestimmungen zugrunde:

- "Wellenfrontmodulator" im Sinne dieser Erfindung eine Einrichtung zur gezielten Beeinflussung der Phase und/oder der Amplitude einer Lichtwelle. Basierend auf einem reflektierenden optischen Element (deformierbarer Spiegel, elektrostatische Ansteuerung oder durch ein Piezoarray angesteuert oder als bimorpher Spiegel). Dieses kann kontinuierlich oder segmentiert aufgebaut sein. Insbesondere können die Segmente zur Ansteuerung der jeweiligen Problemstellung angepaßt werden.
- "Aberrationen im Mikroskop": Die bei einem defokussierten Betriebsmode auftretenden Aberrationen des Mikroskopobjektives lassen sich kategorisieren in prinzipiell korrigierbare und nicht korrigierbare Anteile. Ursächlich können die Aberrationen eingeteilt werden in durch das Objektiv verursachte, durch die weitere Abbildungsoptik des Mikroskops verursachte und letztlich durch das Präparat selbst verursachte Aberrationen.
- "Ansteuerung des Wellenfrontmodulators": die Ansteuerung des Wellenfrontmodulators erfolgt durch einen Rechner mit Hilfe geeigneter Software. Die erforderlichen Stellgrößen sind entweder zuvor berechnet worden (offline) oder werden aus gemessenen Größen berechnet (online, z.B. durch einen Wellenfrontsensor oder durch Vermessung der Punkthelligkeit im Zwischenbild).

**Beschreibung der Erfindung**

Sowohl bei der konventionellen Licht- als auch bei der lasergestützten Mikroskopie muß der Fokus des Objektivs mit hoher Präzision sowohl entlang der optischen Achse als auch lateral verschoben werden. Bei konventionellen Mikroskopen geschieht dies durch mechanische Verschiebung des Objekttisches bzw. des Objektives. Zudem sind im Falle einer Beleuchtung mittels Laserstrahlung Verschiebungen im Objektraum notwendig. Es ergibt sich damit die Notwendigkeit einer dreidimensionalen Fokusführung im Objektraum.

Eine Verwendung der adaptiven Optik besteht darin, die axiale Verschiebung des Fokus im Objektraum ohne Veränderung des Abstandes zwischen Objektiv und Objekt zu erreichen.

Erfindungsgemäß ist vorgesehen, diese Verschiebung an der Wellenfront des Strahlenganges vorzunehmen. Dabei entspricht die axiale Verschiebung des Fokus im Objekt einer sphärischen Veränderung der Wellenfront, die laterale Verschiebung einer Kippung der Wellenfront. Erfindungsgemäß werden auch Aberrationen im Strahlengang durch Veränderung der Wellenfront ausgeglichen. Diese Manipulationen werden in einer *Pupillenebene des Strahlenganges* vorgenommen.

Um bei der *konventionellen Lichtmikroskopie im Beobachtungsstrahlengang* eine axiale Verschiebung des Fokus im Objektraum ohne eine Veränderung des Abstandes Objektiv zu Objekt zu erreichen, muß die Wellenfront in der Pupille des Objektivs oder einer zur Pupillenebene äquivalenten Ebene sphärisch verformt werden. Eine solche Verformung kann durch einen Wellenfrontmodulator, nämlich einen Wellenfront-Phasenmodulator, erreicht werden.

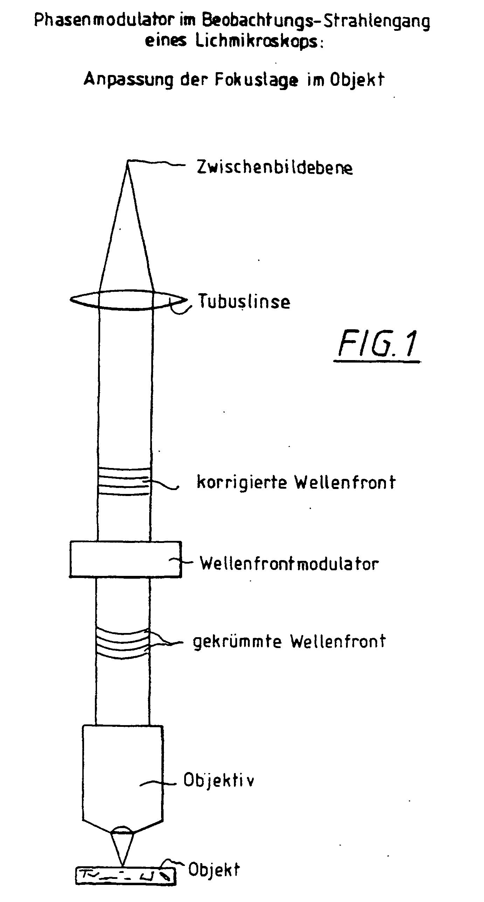

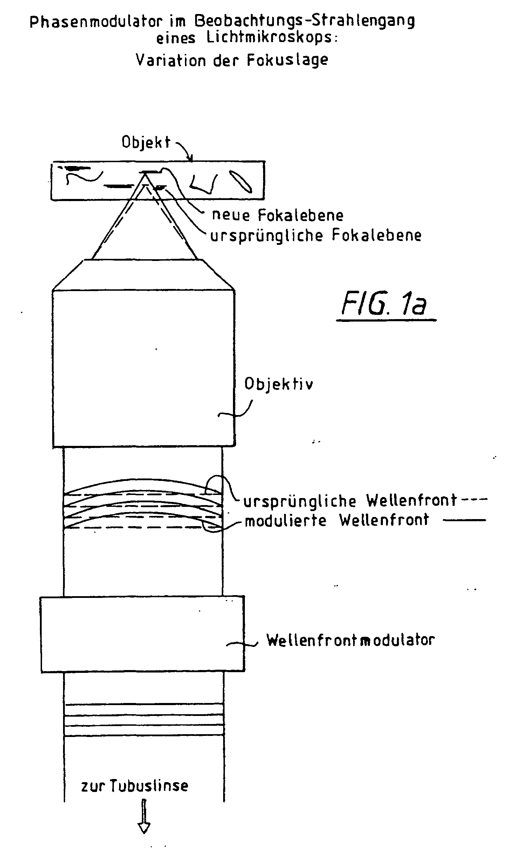

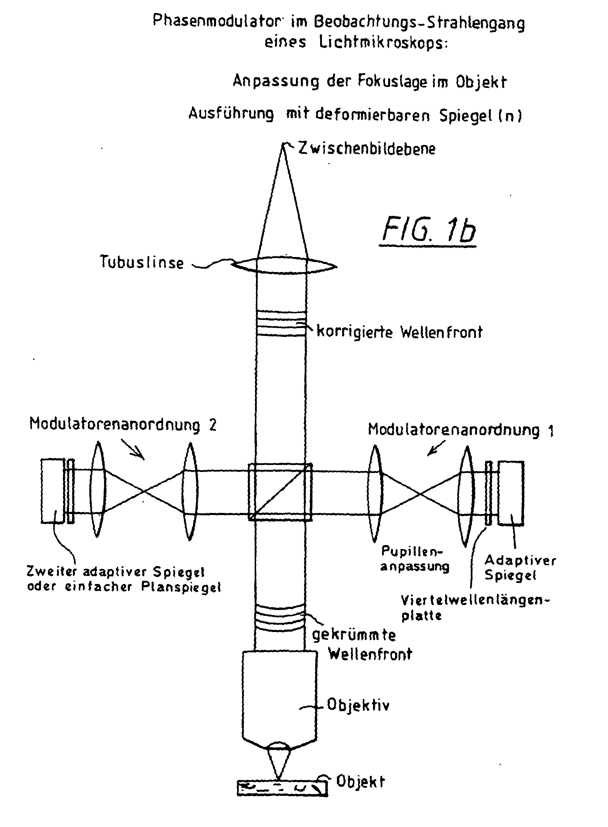

Fig.1 und Fig. 1a zeigen einen schematischen Abbildungsstrahlengang eines Lichtmikroskopes mit einem betrachteten Objekt, einem Objektiv und einer Tubuslinse zur Erzeugung eines Zwischenbildes, das mit Okularen (nicht dargestellt) betrachtet werden kann. Zwischen Tubuslinse und Objektiv ist erfindungsgemäß ein Wellenfrontmodulator angeordnet. Die nach dem Objektiv gekrümmte Wellenfront wird durch den Wellenfrontmodulator korrigiert, indem die Abberationen des Objektivs ausgeglichen werden.

Berechnungen haben gezeigt, daß bei Krümmungsradien der Wellenfront in der Pupille zwischen -3,0m und 1,5m der Fokus um mehr als 1,5mm verschoben werden kann. Dies ist abhängig vom verwendeten Objektiv; im angegebenen Fall beziehen sich die Angaben auf das Epiplan-Neofluar 20x/0.5. Verschiebungen im Bereich einiger zehn Mikrometer reichen in den meisten Fällen bereits aus. Wie die mathematischen Rechnungen weiter gezeigt haben wird das Intervall einer möglichen Fokusverschiebung mit steigender Vergrößerung des Objektives geringer. Da das Objektiv jedoch nicht für diese sphärisch verformte Wellenfront in der Eintrittspupille berechnet und konstruiert ist, sind Aberrationen durch das Objektiv bei der Defokussierung nicht zu vermeiden.

Eine solche Fokusverschiebung ohne mechanische Beeinflussung des Objektives hat mehrere Vorteile. Zum einen wird durch den festen Arbeitsabstand von Objektivfrontlinse zum Objekt jegliche mechanische Beeinflussung des Objektes durch das Mikroskopobjektiv eliminiert. Es wird damit z.B. erst möglich am statischen, wasserimmergierten Objekt schnittweise Bildaufnahmen mit unterschiedlicher Tiefenlage der Beobachtungsebene durchzuführen. Eine solche Technik scheiterte bisher an der mechanischen Verformung des Objektes und seiner Umgebung durch mechanischen Druck auf das Präparat.

Durch den festen Arbeitsabstand am Mikroskop ergeben sich auch Vorteile bei der analytischen Untersuchung von Proben im biomedizinischen Bereich. Bei der Verwendung von Mikrotiterplatten kann eine Korrektur von Aberrationen, die von der Mikrotiterplatte herrühren, ausgeglichen werden. Die Mikrotiterplatte kann optisch in den Strahlengang einbezogen und das Mikroskopobjektiv teilweise (so z.B. die Frontlinse) in die Mikrotiterplatte integriert werden.

Fig. 1b zeigt beispielhaft eine Ausführung eines Lichtmikroskopes mit deformierbaren Spiegeln, die die Wellenfront in Richtung der Tubuslinse korrigieren. Eine erste und eine zweite Modulatoranordnung werden über einen Strahlteiler zwischen Objektiv und Tubuslinse in die Abbildung einbezogen. Vor den Modulatoranordnungen sind jeweils noch Optiken zur Pupillenanpassung vorgesehen.

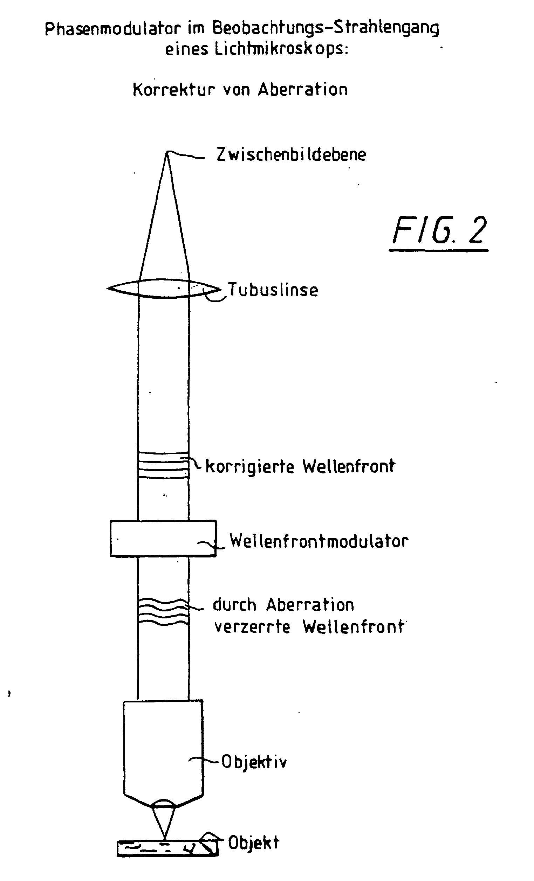

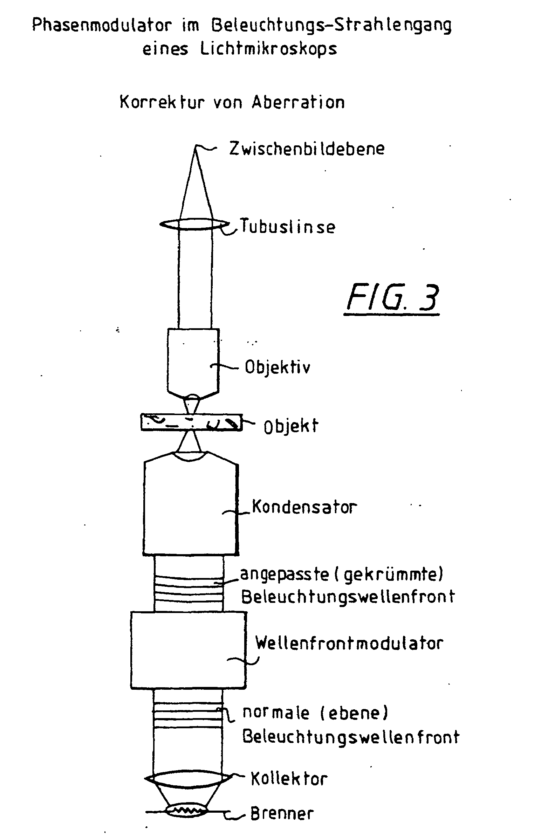

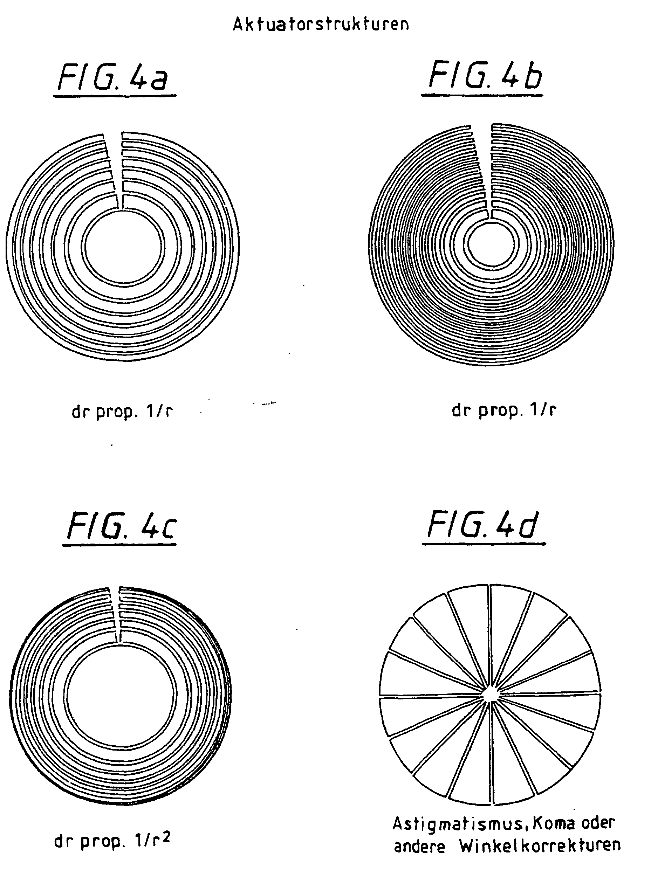

Durch eine geeignete Verformung der Wellenfront durch den Wellenfrontmodulator ist auch eine Korrektur von Aberrationen durch das Präparat und die Probenumgebung möglich. Dies ist in Fig.2 dargestellt. Hier wird die durch Abberationen verzerrte Wellenfront durch den zwischen Objektiv und Tubuslinse angeordneten Wellenfrontmodulator korrigiert. Dazu reichen jedoch die sphärischen Anteile in der Wellenfrontkorrektur nicht aus, es müssen asphärische Anteile hinzugenommen werden. Für die rotationssymmetrischen Aberrationen (alle Terme der sphärischen Aberration höherer Ordnung) reichen ringförmige Aktuatoren aus. Für die winkelabhängigen Aberrationen müssen segmentierte Aktuatoren verwendet werden (Fig.4). Diese können entweder miteinander im selben Wellenfrontmodulator integriert werden, oder man setzt zwei unabhängige Modulatoren in verschiedenen Pupillenebenen ein. Im ersten Fall skaliert die Anzahl der Aktuatoren quadratisch mit der geforderten Auflösung, im letzteren linear, was geringeren Aufwand an Ansteuerelektronik bedeutet.

Die derzeit gängigen Phasenmodulatoren sind in ihrer Amplitude und ihrem maximal erzeugbaren Phasengradienten begrenzt. Dies begrenzt wiederum die Korrekturmöglichkeiten weitab vom Arbeitspunkt des Objektives. Denkbarer Ausweg ist die Kombination von adaptiver Optik mit konventioneller Glasoptik. Letztere dient dabei zur Erzeugung eines großen Phasengradienten bzw. großer Wellenfront-Amplituden, die Feinabstimmung wird durch die adaptive Optik erreicht.

Bei einer Verschiebung zu größerem Fokusabstand tritt, bedingt durch die erforderliche konvexe Wellenfront in der Pupille, eine Vignettierung ein, die zu einer geringeren Lichtausbeute bzw. einer verringerten nutzbaren Apertur führt. Diese Einschränkung ist konstruktionsbedingt und kann im Prinzip zukünftig bei der optischen Auslegung eines Objektivs berücksichtigt werden.

Bei der Verschiebung des Fokus entstehen darüber hinaus Aberrationen im Strahlengang, die zu Verzerrungen des Bildes führen können. Zur Korrektur dieser Aberrationen können der Wellenfront wie oben angedeutet nicht-sphärische Anteile überlagert werden. Nach mathematischen Berechnungen kann bereits mit geringen rotationssymmetrischen Anteilen der Ordnung $r^4$ und $r^6$ (sphärische Aberration höherer Ordnung) an der Wellenfront eine erhebliche Bildverbesserung erreicht werden (Strehlverhältnis >98%).

Ein weiterer Vorteil des Verfahrens liegt im achromatischen Verhalten eines reflektionsbasierten Wellenfrontmodulators. Bei geeigneter Beschichtung des Membranspiegels kann der gesamte Spektralbereich vom tiefen UV bis hin zum fernen IR phasenmoduliert werden. Chromatische Aberrationen sind (bis auf Absorptionseffekte) ausgeschlossen. Daraus ergeben sich neue Verfahren der chromatischen Korrektur in der Bilderzeugung. Die Beleuchtung wird dazu sequentiell auf unterschiedliche Wellenlängen eingestellt, wobei für jede der individuellen Wellenlängen der Wellenfrontmodulator auf die geeignete optische Korrektur eingestellt wird. Man erhält so einen Satz von chromatisch optimal korrigierten Bildern, die überlagert eine Weißlichtaufnahme hoher Farbkorrektur ergeben, welche bei Verwendung klassischer Glasoptik so nicht erreicht werden kann. Prinzipiell kann damit ein Objektiv mit Wellenfrontmodulator auf beliebig viele Wellenlängen im optischen Spektrum optimal korrigiert werden.

Zur Verschiebung des Fokus und zur Korrektur von sphärischen Aberrationen haben die erforderlichen Wellenfronten zunächst lediglich rotationssymmetrischen Charakter. Zur Erzeugung solcher Wellenfronten in der Pupille des Mikroskopobjektivs muß die adaptive Optik eine Verteilung der Aktuatoren mit zum Rand hin zunehmender Ortsfrequenz aufweisen (Fig.4), da am Rand der größte Gradient in der Wellenfront auftritt.

Fig.4 zeigt verschiedene Aktuatorstrukturen, mit zunehmender Ortsfrequenz in Fig.4a bis Fig.4c sowie mit Segmenten in Fig.4d zur Korrektur beispielsweise von Astigmatismus und Koma.

Bei einer kameragestützten Bildaufnahme tritt besonders bei hoher räumlicher Auflösung der Effekt des Pixelmismatchings auf. Dabei ist das Mikroskopbild gegen die Kamera verschoben, so daß die einzelnen Bilder des Videosignals räumlich verschoben sind. Dieses Problem läßt sich durch einen variablen Kippanteil in der Wellenfront des abzubildenden Signals beseitigen. Durch eine geeignete Regelung können die Zitterbewegungen des Bildsignals ausgeregelt und somit ein statisches Bild erzeugt werden.

Ein anderes Problem der kameragestützten Bildaufnahme ist die Bifdfefdwötbung. Durch die Verwendung eines Wellenfrontmodulators im Abbildungsstrahlengang kann während des Betriebes die Bildfeldwölbung auf Kosten anderer Parameter wie chromatische Korrektur verbessert werden.

Im *Beleuchtungsstrahlengang* lassen sich bei der *konventionellen Lichtmikroskopie* durch den Einbau adaptiver Optik eine flexible Auslegung der Optik, Verbesserung der optischen Eigenschaften des Mikroskops sowie neue Beleuchtungstechniken realisieren. In ähnlicher Weise wie im Beobachtungsstrahlengang kann ein Wellenfront-Phasenmodulator die Abbildung des Beleuchtungsbrenners (oder ggf. des Lasers) in die Objektebene optimieren. Ebenso kann bei kritischer Beleuchtung eine gleichmäßige Ausleuchtung des Objektraumes eingestellt werden. Fig.3 zeigt einen Wellenfrontmodulator zwischen Kollektor und Kondensor , die einem Beleuchtungsbrenner nachgeordnet sind.

Mit einem Wellenfront-Amplitudenmodulator kann die Beleuchtungsintensität in der Objektebene räumlich bezüglich Intensität und Homogenität optimiert werden. Prinzipiell ist so ein Pupilleneingriff machbar. Durch gezielte Veränderung des Kippanteiles der Wellenfront kann eine schiefe Beleuchtung des Objektraumes erreicht werden.

In der *konfokalen Mikroskopie bzw. im Laser-Scan-Mikroskop* sind durch die Verwendung von Laserlicht zur Beleuchtung die Anwendungen noch leichter realisierbar als in der klassischen Lichtmikroskopie.

So bietet bei der Verwendung eines Lasers in der Beleuchtung der Einsatz eines Wellenfrontmodulators bereits bei der Einkopplung in die Beleuchtungsfaser Vorteile. Hier sind variable Anpassungsoptiken realisierbar, deren Brennweiten und Abbildungsverhältnis abhängig von den Strahleigenschaften der (des) Laser(s) und der verwendeten Faser(n) einstellbar ist, um eine optimale Fasereinkopplung zu erreichen. Anordnungen auf demselben Prinzip können auch bei der Kopplung von Beleuchtungsfasern auf die Mikroskopoptik eingesetzt werden. Durch die Schnelligkeit der Modulatoren sind auch zeitaufgelöste Messungen und Multiplexverfahren realisierbar, um zwischen einem oder mehreren Lasern und verschiedenen Fasern umzuschalten.

Bei der konfokalen Abbildung kann die Transmission durch das definierende Pinhole dynamisch angepaßt werden. Sowohl Lage als auch Durchmesser des Fokus ist in weiten Grenzen variabel. Der oder die Beleuchtungslaser können so optimal gemäß der jeweiligen Anforderungen justiert werden. Weiter kann auch die Kontur der Lichtverteilung des Fokus dem Pinhole angepaßt werden. Nicht nur rotationssymmetrische, sondern auch andere Umrisse, wie rautenförmige oder rechteckige Aperturen, die in real verwirklichten Pinholes immer vorkommen, können damit angepaßt und auf maximale Transmission oder minimale Beugungsverlußte optimiert werden. Eine solche Optimierung kann einerseits statisch durch zuvor berechnete Parameter eingestellt werden oder während des Betriebs auf bestimmte, zu optimierende Parameter geregelt werden.

Wie bei der klassischen Lichtmikroskopie auch läßt sich die chromatische Korrektur abhängig vom verwendeten Beleuchtungslaser einstellen. Durch die Verwendung schneller, synchron angesteuerter Wellenfrontmodulatoren in der Lasereinkopplung, der Beleuchtungs- sowie der Aufnahmeoptik können sequentiell Bilder bei unterschiedlicher Wellenlänge, jeweils optimal chromatisch korrigiert, aufgenommen werden.

## Kurze Beschreibung der Zeichnungen

Die Erfindung soll anhand von Ausführungsbeispielen näher erläutert werden. Die zugehörigen Zeichnungen zeigen in

| | |
|---|---|
| Fig.1 und Fig.1a | den schematischen Abbildungsstrahlengang eines Lichtmikroskopes |
| Fig.2 | die Korruktur einer durch Abberationen verzerrte Wellenfront mit einem zwischen Objektiv und Tubuslinse angeordneten Wellenfrontmodulator |
| Fig.3 | einen zwischen Kollektor und Kondensor angeordneten Wellenfrontmodulator zur Einstellung einer gleichmäßigen Ausleuchtung des Objektraumes |
| Fig.4 | verschiedene Aktuatorstrukturen, darunter in Fig.4a bis Fig.4c mit zunehmender Ortsfrequenz und in Fig. 4d mit Segmenten |
| Fig.5 | verschiedene Ausführungen von Wellenfrontmodulatoren, darunter mit elektrostatischen (Fig.5a), piezogesteuerten (Fig.5b) und bimorphen Membranen (Fig.5c) als Stellelemente |
| Fig.6 | Wellenfrontmodulator mit elektrostatischem Membranspiegel |

## Ausführliche Beschreibung der Zeichnungen

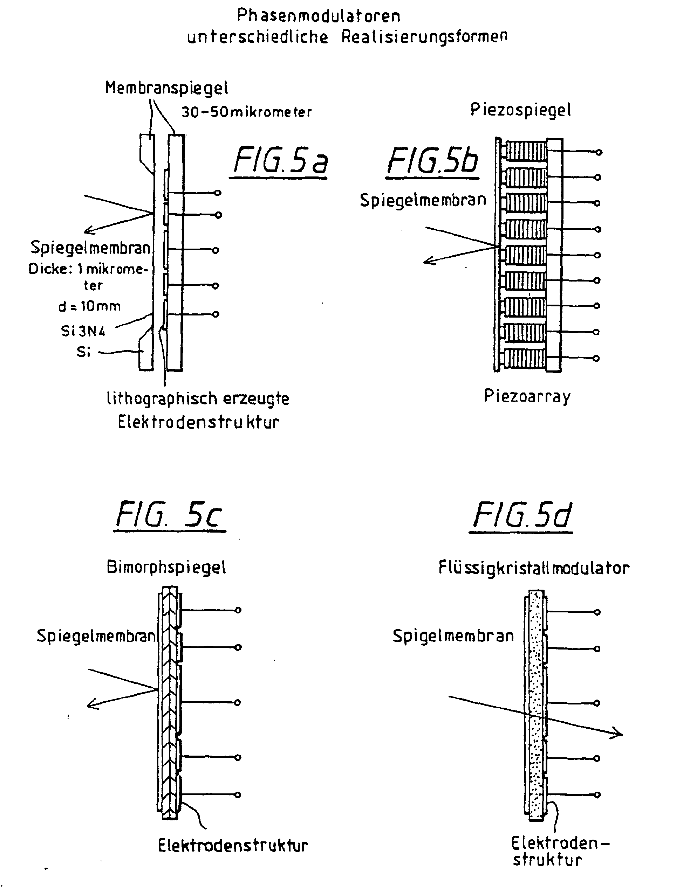

In Fig.5 sind verschiedene Ausführungen von Wellenfrontmodulatoren dargestellt, wie sie derzeit erhältlich sind. So sind etwa transmittierende Modulatoren auf LCD-Basis, wie in Fig.5d dargestellt, verfügbar oder auch reflektierende Modulatoren mit beweglichen Membranen. Letztere wiederum können nach der Art ihrer Stellelemente unterschieden werden: elektrostatische (Fig.5a), piezogesteuerte (Fig.5b) und bimorphe Membranen (Fig.Sc) als Stellelemente. Obwohl sich die Erfindung auf Wellenfrontmodulatoren allgemein bezieht, hat der elektrostatische Membranspiegel wegen seiner zahlreichen Vorteile den Vorzug.

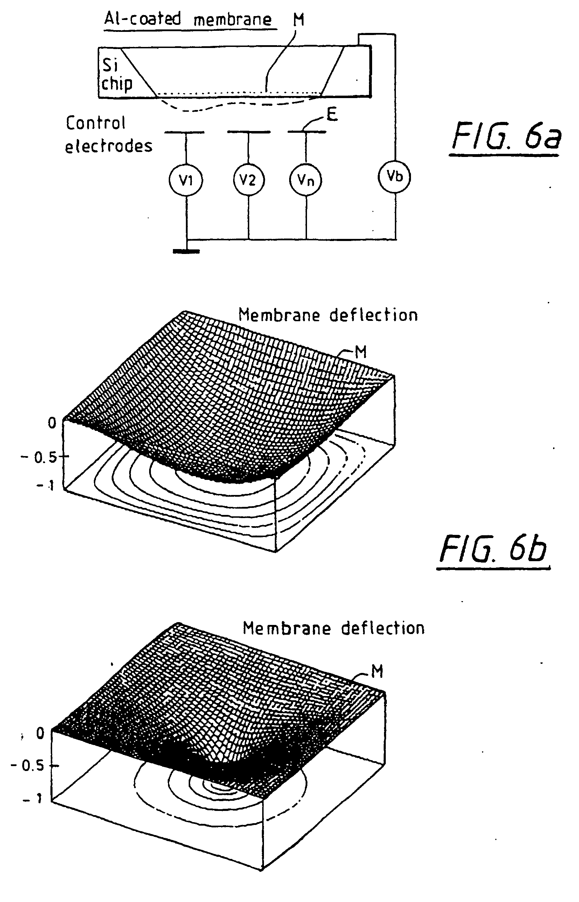

Ein solcher mikrofabrizierter monolithischer Membranspiegel, der in Fig.6a und Fig.6b deutlicher mit Membran M und Ansteuerelektroden E dargestellt ist, zeichnet sich durch hohe Ebenheit und gute optische Qualität der reflektierenden Fläche ($< \lambda/20$), geringe Baugröße (2mm bis 20mm), hysteresefreie Ansteuerung mit niedrigen Spannungen ($< 100V$), hohe mechanische Grenzfrequenz der Membran (mehrere MHz), großer Hub ($\approx 100 \mu m$) und damit kleiner Krümmungsradius (bis herunter zu 1 m) und in weiten Grenzen variabler Aktuatorstruktur mit hoher räumlicher Dichte aus. Die minimale Aktuatorgröße ist letztlich nur durch die Bedingung begrenzt, daß diese größer sein muß als der Abstand Elektrode zu Membran.

Der große Vorteil des elektrostatischen Membranspiegels liegt in der Tatsache, daß zur Einstellung einer parabolischen Form lediglich ein konstantes Potential an die Aktuatorelektroden angelegt werden muß. Die parabolische Form des Spiegels ergibt sich bei konstanter Ansteuerung der Elektroden aus dem physikalischen Verhalten der Membran (konstante Flächenkraft). Man kann also mit geringer Dynamik in der Steuergröße, also der angelegten Spannung, eine große Dynamik in der Stellgröße (Spiegelhub) erreichen.

$$I_{2h\nu} = A \cdot I_{exc}^2$$

Fig.6 zeigte bereits den prinzipiellen Aufbau eines adaptiven Spiegels. Er besteht aus einer hochreflektierenden Membran (z.B. Siliziumnitrat) und aus einer Struktur mit Elektroden. Durch eine gezielte Ansteuerung der einzelnen Elektroden kann die darüberliegende Membran deformiert werden und so die Phasenfront des Laserstrahles beeinflußt werden. Es können somit die Deformationen der Phasenfront, die beim Durchgang der Pulse durch das System und die Probe entstehen, kompensiert werden.

Für alle beschriebenen Anordnungen kann vorteilhaft über einen Wellenfrontsensor, der über einen Strahlteiler (nicht dargestellt) mit dem Mikroskopstrahlengang in Verbindung steht, die Wellenfrontanpassung erfaßt und kontrolliert bzw. definiert eingestellt werden.

## Patentansprüche

1.  Mikroskop, bei dem im Beleuchtungsstrahlengang und/oder im Beobachtungsstrahlengang eine adaptive Optik vorgesehen ist, **dadurch gekennzeichnet, daß** in den Beobachtungsstrahlengang zwischen Objektiv und Tubuslinse ein ansteuerbarer, ***reflektierend wirkender*** Wellenfrontmodulator eingeordnet ist, mit dessen Ansteuerung die aufgrund von Abberationen des Objektivs verzerrte Wellenfront korrigiert wird.

2.  Mikroskop nach Anspruch 1, **dadurch gekennzeichnet, daß** im Beobachtungsstrahlengang zwischen Objektiv und Tubuslinse mindestens ein Strahlteiler eingeordnet ist, über den ein Strahlungsanteil aus dem Beobachtungsstrahlengang ausgekoppelt wird, der auf den reflektiven Wellenfrontmodulator gerichtet ist, von diesem mit korrigierter Wellenfront in Richtung auf den Strahlteiler zurückreflektiert wird und über den Strahlteiler wieder in den Mikroskopstrahlengang eingekoppelt wird.

**3.** Verwendung eines Mikroskops nach einem der vorgenannten Ansprüche zur Untersuchung von Proben im biomedizinischen Bereich und/oder zur Korrektur von Abberationen, die von einer Mikrotiterplatte verursacht sind.

**4.** Konfokale Mikroskopanordnung, bei der mindestens ein Wellenfrontmodulator nach den Merkmalen eines oder mehrerer der Ansprüche 1 bis 4 3 in den Beleuchtungsstrahlengang und/oder in den Beobachtungsstrahlengang eingeordnet ist.

**5.** Mikroskop nach einem der vorgenannten Ansprüche, **dadurch gekennzeichnet, daß** ein Wellenfrontsensor zur Erfassung und Kontrolle der aufgrund der Ansteuerung eines Wellenfrontmodulators erfolgten Veränderungen der Wellenfront vorhanden ist, insbesondere hinsichtlich der Auswirkung dieser Veränderungen

    - auf die Phase und/oder Amplitude des Lichts,
    - auf die Verschiebung und Formung des Fokus im Objektraum oder
    - auf die Korrektur von Aberrationen.

## Claims

**1.** Microscope in which an adaptive optical system is provided in the illuminating beam path and/or in the observation beam path, **characterised in that** a controllable reflective wavefront modulator is disposed in the observation path between the objective and the tube lens, the wavefront which is distorted due to aberrations of the objective being corrected by control of the wavefront modulator.

**2.** Microscope as claimed in Claim 1, **characterised in that** in the observation beam path between the objective and the tube lens at least one beam splitter is disposed, by way of which a proportion of the radiation which is directed onto the-wavefront modulator is output from the observation beam path, is reflected back by the wavefront modulator with a corrected wavefront in the direction of the beam splitter and is input again into the microscope beam path by way of the beam splitter.

**3.** Use of a microscope as claimed in any one of the preceding claims for the examination of specimens in the biomedical field and/or for the correction of aberrations which are caused by a microtitre plate.

**4.** Confocal microscope arrangement in which at least one wavefront modulator according to the features of one of more of Claims 1 to 3 is disposed in the illumination beam path and/or in the observation beam path.

**5.** Microscope as claimed in any one of the preceding claims, **characterised in that** a wavefront sensor is provided for the detection and monitoring of the changes made to the wavefront due to the control of a wavefront modulator, in particular with regard to the effect of these changes

    - on the phase and/or amplitude of the light,
    - on the displacement and form of the focus in the object space or
    - on the correction of aberrations.

## Revendications

**1.** Microscope, sur lequel est prévue une optique adaptative dans le trajet du faisceau d'éclairage et/ou dans le trajet du faisceau d'observation, **caractérisé en ce qu'**un modulateur de front d'onde pouvant être activé et à effet réfléchissant, dont l'activation permet de corriger le front d'onde déformé en raison des aberrations de l'objectif, est placé dans le trajet du faisceau d'observation entre l'objectif et la lentille du tube.

**2.** Microscope selon la revendication 1, **caractérisé en ce que** dans le trajet du faisceau d'observation entre l'objectif et la lentille du tube est placé au moins un diviseur de faisceau, par lequel une partie de rayonnement est dissociée du trajet du faisceau d'observation, lequel est orienté vers le modulateur de front d'onde réfléchissant, est réfléchie par celui-ci avec un front d'onde corrigé en direction du diviseur de faisceau et réinjecté par le diviseur de faisceau dans le trajet du faisceau du microscope.

**3.** Utilisation d'un microscope selon l'une quelconque des revendications précédentes pour l'étude d'échantillons dans le secteur biomédical et/ou pour la correction d'aberrations qui sont causées par une plaque de microtitre.

**4.** Agencement de microscope à foyer commun, sur lequel au moins un modulateur de front d'onde est placé selon les caractéristiques de l'une ou de plusieurs des revendications 1 à 3 dans le trajet du faisceau d'éclairage et/ou dans le trajet du faisceau d'observation.

**5.** Microscope selon l'une quelconque des revendications précédentes, **caractérisé en ce qu'**un capteur de front d'onde est présent pour la détection et le contrôle des modifications du front d'onde effectuées sur la base de l'activation d'un modulateur de front d'onde, en particulier en ce qui concerne la conséquence de ces modifications

    - sur la phase et/ ou l'amplitude de la lumière,

- sur le déplacement et la formation du foyer dans l'espace de l'objet ou
- sur la correction des aberrations.

Phasenmodulator im Beobachtungs-Strahlengang
eines Lichmikroskops:

Anpassung der Fokuslage im Objekt

—— Zwischenbildebene

—— Tubuslinse

*FIG.1*

—— korrigierte Wellenfront

—— Wellenfrontmodulator

—— gekrümmte Wellenfront

—— Objektiv

—— Objekt

Phasenmodulator im Beobachtungs-Strahlengang
eines Lichtmikroskops:
Variation der Fokuslage

Objekt

neue Fokalebene
ursprüngliche Fokalebene

*FIG. 1a*

Objektiv

ursprüngliche Wellenfront ---
modulierte Wellenfront ———

Wellenfrontmodulator

zur Tubuslinse

9

Phasenmodulator im Beobachtungs-Strahlengang
eines Lichtmikroskops:

Anpassung der Fokuslage im Objekt

Ausführung mit deformierbaren Spiegel (n)

Zwischenbildebene

## FIG. 1b

Tubuslinse

korrigierte Wellenfront

Modulatorenanordnung 2

Modulatorenanordnung 1

Zweiter adaptiver Spiegel
oder einfacher Planspiegel

Pupillenanpassung

Adaptiver
Spiegel

Viertelwellenlängenplatte

gekrümmte
Wellenfront

Objektiv

Objekt

Phasenmodulator im Beobachtungs-Strahlengang
eines Lichtmikroskops:

Korrektur von Aberration

Zwischenbildebene

*FIG. 2*

Tubuslinse

korrigierte Wellenfront

Wellenfrontmodulator

durch Aberration
verzerrte Wellenfront

Objektiv

Objekt

Phasenmodulator im Beleuchtungs-Strahlengang
eines Lichtmikroskops

Korrektur von Aberration

*FIG. 3*

- Zwischenbildebene
- Tubuslinse
- Objektiv
- Objekt
- Kondensator
- angepasste (gekrümmte) Beleuchtungswellenfront
- Wellenfrontmodulator
- normale (ebene) Beleuchtungswellenfront
- Kollektor
- Brenner

Aktuatorstrukturen

## FIG. 4a

dr prop. 1/r

## FIG. 4b

dr prop. 1/r

## FIG. 4c

dr prop. 1/r²

## FIG. 4d

Astigmatismus, Koma oder
andere Winkelkorrekturen

## Phasenmodulatoren
## unterschiedliche Realisierungsformen

Membranspiegel
30-50 mikrometer

**FIG.5a**

Spiegelmembran
Dicke: 1 mikrometer
d = 10 mm
Si3N4
Si

lithographisch erzeugte
Elektrodenstruktur

Piezospiegel

**FIG.5b**

Spiegelmembran

Piezoarray

**FIG. 5c**

Bimorphspiegel

Spiegelmembran

Elektrodenstruktur

**FIG.5d**

Flüssigkristallmodulator

Spigelmembran

Elektrodenstruktur

Al-coated membrane M

Si chip

Control electrodes

E

V1  V2  Vn  Vb

*FIG. 6a*

Membrane deflection

M

0
- 0.5
- 1

*FIG. 6b*

Membrane deflection

M

0
- 0.5
- 1

15